# EUROPÄISCHE PATENTSCHRIFT

(11) **EP 2 185 615 B1**
(45) Veröffentlichungstag und Bekanntmachung des Hinweises auf die Patenterteilung: **23.11.2011**
(21) Anmeldenummer: 08804710.5
(22) Anmeldetag: 25.09.2008
(51) Int. Cl.: C08G 18/10, C08G 18/48, C08G 18/72, C08G 18/75

(54) **NCO-FUNKTIONELLES PREPOLYMER AUS DICYCLOHEXYLMETHANDIISOCYANAT, ISOPHORONDIISOCYANAT UND POLYETHERPOLYOLEN MIT VERMINDERTER NEIGUNG ZUR KRISTALLISATION**
NCO-FUNCTIONAL PREPOLYMER MADE OF DICYCLOHEXYL METHANE DIISOCYANATE, ISOPHORONE DIISOCYANATE, AND POLYETHER POLYOLS, HAVING A REDUCED TENDENCY TO CRYSTALLIZATION
PRÉPOLYMÈRE À FONCTIONS NCO À BASE DE DIISOCYANATE DE DICYCLOHEXYLMÉTHANE, DE DIISOCYANATE D'ISOPHORONE ET DE POLYÉTHER-POLYOLS AYANT UNE TENDANCE LIMITÉE À LA CRISTALLISATION

(30) Priorität: 10.11.2007 DE 102007053687
(43) Veröffentlichungstag der Anmeldung: 19.05.2010
(73) Patentinhaber: Evonik Degussa GmbH, 45128 Essen (DE)
(72) Erfinder: RAUKAMP, Andre, 48720 Rosendahl-Holtwick (DE); HOPPE, Dirk, 48301 Nottuln (DE); NACKE, Christoph, 46514 Schermbeck (DE); LOMÖLDER, Rainer, 48153 Münster (DE)
(86) Internationale Anmeldenummer: PCT/EP2008/062810
(87) Internationale Veröffentlichungsnummer: WO 2009/059848

(56) Entgegenhaltungen:
- EP-A- 0 019 368
- EP-A- 0 452 775
- EP-A- 1 197 505
- DE-A1- 2 447 625

## Beschreibung

Die Erfindung betrifft NCO-funktionelle Prepolymere aus Dicyclohexylmethandiisocyanat (nachfolgend H₁₂MDI) und Polyetherpolyolen mit verminderter Neigung zur Kristallisation, wobei das H₁₂MDI anteilig mit weiterem monomeren Isophorondiisocyanat (nachfolgend IPDI) abgemischt wird und somit die Neigung zur Kristallisation reduziert oder gänzlich verhindert werden kann sowie die Herstellung und Verwendung.

EP-A-0 019 368 offenbart NCO-Prepolymere, die aus Polypropylenglycol, einer Mischung von H₁₂MDI/IPDI und einem kurzkettigen Kettenverlängerer, wie Dipropylenglycol oder Diethylenglycol, hergestellt werden; durch weitere Reaktionen entstehen daraus wässrige Dispersionen für Beschichtungen.

EP-A-0 452 775 offenbart aliphatische lichtechte PU-Polyharnstoffelastomere auf Basis von NCO-Prepolymeren, hergestellt aus Polyesterpolyolen und einer Mischung von IPDI/H₁₂MDI.

EP-A-1 197 505 offenbart transparente flüssige NCO-Prepolymere, basierend auf Poly(oxytetramethylen)glycol und jeweils IPDI oder H₁₂MDI (D3: siehe die im Internationalen Recherchenbericht zitierten Stellen).

DE 24 47 625 A1 offenbart NCO-Prepolymere mit geringere Kristallisationsneigung, auf Basis von 4,4'-MDI oder Roh-MDI, dem das Isomer 2,4'-MDI beigefügt wurde.

NCO-funktionelle Polyurethan Prepolymere sind seit langem bekannt *[*Polyurethane für Lacke und Beschichtungen, Dr. Manfred Bock, 1999, 23 ff, 157ff*].* In Kombination mit z. B. Polyaminen oder Polyolen können sie zu hochmolekularen Polymeren zur Herstellung von Beschichtungen, Klebstoffen, Elastomeren und Gießharzen verwendet werden, oder auch als feuchtigkeitshärtende 1 K-Systeme Anwendung finden.

Die Herstellung von NCO-funktionellen Polyurethan Prepolymeren erfolgt mit einem Überschuss an monomeren Diisocyanaten. Über das stöchiometrische Verhältnis können die physikalischen und chemischen Eigenschaften des Prepolymers wie Viskosität und NCO-Zahl gezielt eingestellt werden. Diese Eigenschaften sind insbesondere für die Verwendung dieser Prepolymere als Vernetzerkomponente für Gießharzsysteme wichtig, die mittels 2-Komponenten - Mischanlagen verarbeitet werden.

Durch gezielte Auswahl des Polyetherpolyols zur Prepolymerisierung von H₁₂MDI, kann die Viskosität des Prepolymers der Viskosität des Polyols angeglichen und somit ein homogenes Vermischen erreicht werden. Da oftmals 2-Komponenten-Mischanlagen keine variable Einstellung des Mischungsverhältnisses erlauben, kann durch Einstellen Jedoch neigen Prepolymere auf Basis von H₁₂MDI oftmals zur Trübung durch partielle Kristallisation während der Lagerung und müssen vor Verwendung mittels Temperatur vorbehandelt (homogenisiert) werden.

Aufgabe dieser Erfindung war es, diese Kristallisationsneigung zu reduzieren und gleichzeitig die gute Witterungsbeständigkeit von H₁₂MDI-basierten Systemen beizubehalten.

Die erfindungsgemäße Lösung der Aufgabe besteht darin, dass Mischungen des H₁₂MDI mit 3-Isocyanatomethyl-3,5,5-trimethylcyclohexylisocyanat (nachfolgend Isophorondiisocyanat, Abkürzung IPDI) zur Prepolymerisierung eingesetzt werden.

Gegenstand der Erfindung ist ein NCO-funktionelles Polyurethan Prepolymer mit einer NCO-Funktionalität von 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C) 5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol.

Der besondere Wert dieser Formulierungen liegt in der einfachen Handhabbarkeit dieser Systeme unter Beibehaltung der Elastomereigenschaften durch gezielte Auswahl der Isocyanatmischung zwecks Verhinderung der Neigung zur Kristallisation.

Unter den erfindungsgemäßen NCO-funktionellen Polyurethan Prepolymeren sind Verbindungen zu verstehen, zu deren Herstellung monomere Diisocyanate überstöchiometrisch mit polyfunktionellen Polyetherpolyolen umgesetzt werden.

Als Komponente A) können prinzipiell alle Isomere des H₁₂MDI eingesetzt werden und zwar 2,2'-und 2,4'- und 4,4'-Dicyclohexylmethandiisocyanat, allein oder in Mischungen. Bevorzugt besteht das H₁₂MDI aus mindestens 80 Gew.-% des 4,4'-H₁₂MDI, bevorzugt aus 85 - 95 Gew.-%, und zu 5 bis 20 Gew.-%, bevorzugt 7 - 15 Gew.-% 2,4'-H₁₂MDI. Vorzugsweise enthält das H₁₂MDI einen geringen Anteil an 2,2'-H₁₂MDI von kleiner 5 Gew.-%, bevorzugt kleiner 1 Gew.-%. Der trans, trans - Gehalt des 4,4'-H₁₂MDI ist kleiner 30 %, bevorzugt von 5 bis 25 %.

### B) Als Komponente B wird 3-Isocyanatomethyl-3,5,5-trimethylcyclohexylisocyanat (nachfolgend Isophorondiisocyanat, Abkürzung IPDI) eingesetzt.

Bei den Polyetherpolyolen C) handelt es sich um Polyalkoxyalkylene mit endständigen OH-Gruppen. Man erhält sie durch Addition von cyclischen Ethern wie Ethylenoxid und/oder häufiger Propylenoxid an bifunktionelle Startermoleküle. Werden letztere mit trifunktionellen Startern abgemischt, lassen sich auch verzweigte Reaktionsprodukte erzielen. Als Startermoleküle dienen in der Regel mehrwertige Alkohole wie Ethylenglykol, 1,2-Propandiol, Trimethylolpropan, Glycerin oder Zucker. Für spezielle Anwendungen werden auch auf aliphatischen Diaminen gestartete, tetrafunktionelle Polyether angeboten.

Bevorzugte Polyetherpolyole weisen 2 - 5, besonders bevorzugt 2 - 3 OH-Gruppen je Molekül auf. Diese können sowohl primär oder auch sekundär sein.
Bevorzugte Alkohole sind Ethylenglykol, 1,2-Propandiol, Trimethylolpropan, Glycerin und Pentaerythritol. Bevorzugte Alkylenoxide sind Ethylenoxid und Propylenoxid. Es können auch Mischungen eingesetzt werden.

Die OH-Zahl beträgt 20 bis 800 mg KOH/g, bevorzugt 30 bis 200 mg KOH/g.
Das Molekulargewicht M_{w} beträgt 200 - 8000, bevorzugt 500 - 6000 g/mol.

Als geeignete Polyetherpolyole können z. B. VORANOL CP 4755, VORANOL CP 3355 (DOW Chemical Company), oder auch POLY G - 30-400 T (Arch Chemicals, Inc.) eingesetzt werden.

Diese erfindungsgemäßen Polyurethan-Prepolymere weisen eine NCO-Funktionalität von ≥ 2 auf, bevorzugt von 2 bis 3. Der NCO-Gehalt (gemessen nach DIN EN ISO 11909) beträgt 5 bis 30 Gew.-%, bevorzugt 10 bis 25 Gew.-%. Außerdem weisen sie eine Viskosität bei 23 °C von 100 mPas bis 2500 mPas (gemessen nach DIN EN ISO 3219) auf.

Weiterer Gegenstand der Erfindung ist ein Verfahren zur Herstellung von NCOfunktionellem Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C) 5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol,
durch Umsetzung der Komponente A) und B) mit C).

Die Herstellung der erfindungsgemäßen Prepolymere erfolgt durch Umsetzung der Komponenten A) und B) mit dem Polyetherpolyol C) bei ca. 60 °C. Dabei können die Komponenten A) und B) gleichzeitig mit der Komponente C) umgesetzt werden. Es ist aber auch möglich die Komponenten einzeln mit der Komponente C) umzusetzen und anschließend die so erhaltenen zwei Prepolymere zu dem erfindungsgemäßen Polyurethan-Prepolymer zu vermischen. Oftmals werden hierzu Metallkatalysatoren zwecks Reduzierung der Prozesszeiten eingesetzt. Aber auch aminische Katalysatoren sind prinzipiell geeignet. Geeignete Katalysatoren sind z. B. Dibutylzinndilaurat oder Dibutylzinndiacetat.

Gegenstand der Erfindung ist auch die Verwendung der erfindungsgemäßen Polyurethan-Prepolymere als feuchtigkeitshärtende Bindemittel, oder als Vernetzer von polyfunktionellen Polyolen, oder auch anderen gegenüber Isocyanatgruppen reaktionsfähigen Produkten, insbesondere in 2 Komponenten Polyurethan-Systemen und insbesondere von Beschichtungen, Klebstoffen, Elastomeren und Gießharzen. Ebenfalls Gegenstand der Erfindung sind Beschichtungen, Klebstoffe, Elastomeren, Gießharze, 2 Komponenten Polyurethan-Systeme, beschichtete Gegenstände und Gegenstände, welche die erfindungsgemäßen Polyurethan-Prepolymere enthalten. Die hierzu verwendeten polyfunktionellen Polyole, die mit dem erfindungsgemäßen Prepolymer umgesetzt werden, weisen im Allgemeinen eine OH-Zahl von 5 - 400 mg KOH/g auf. Geeignet sind Polyetherpolyole, Polycaprolactone,
Polytetramethylenglykol, Polyacrylatpolyole, Polycarbonatpolyole und Polyesterpolyole.

Als Polyesterpolyole geeignet sind alle Polykondensationsprodukte aus einem Überschuss niedermolekularer, polyfunktioneller Alkohole mit mehrwertigen Carbonsäuren bzw. deren Anhydride.

Als Polycaprolactone sind Polymerisationsprodukte des Caprolactons unter Anwesenheit eines Alkohols oder eines Diols zu verstehen.

Unter Polytetramethylenglykol sind Polymere des Tetrahydrofurans zu verstehen.

Als Polycarbonatpolyole sind Polymerisate macrocyclischer Kohlensäurediester zu verstehen.

Unter Polyacrylatpolyole sind Polymerisate aus Derivaten der Acryl- und Methacrylsäure, hauptsächlich den Estern, zu verstehen.

Außerdem können weiterhin Stabilisatoren zwecks Verbesserung der Licht- und Alterungsbeständigkeit Einsatz finden.

Nachfolgend wird die Erfindung durch Beispiele näher erläutert.

### Beispiele

Die folgenden Beispielformulierungen weisen eine NCO-Zahl von ca. 16 Gew.-% auf.

Die Herstellung erfolgte in einer Dreihalskolbenrührapparatur unter Verwendung von trockenem Stickstoff mit einer Reinheit von 99,999 %. Die Rezepturbestandteile wurden vorgelegt und auf 60 °C erhitzt. Bei Erreichen der theoretischen NCO-Zahl wurde bei Umgebungstemperatur auf Raumtemperatur abgekühlt.

### Vergleichsformulierung:

| | |
|---|---|
| 54,67 | Gew.-% H₁₂MDI |
| 45,30 | Gew.-% VORANOL CP 4755, Mw: 5000; OH-Zahl: 35 mg KOH/g; Funktionalität: 3 |
| 0,03 | Gew.-% Dibutylzinndilaurat (DBTDL) |

### Erfindungsgemäße, kristallisationsstabile Formulierung I

| | |
|---|---|
| 42,30 | Gew.-% H₁₂MDI |
| | 10,60 Gew.-% IPDI |
| 47,07 | Gew.-% VORANOL CP 4755 |
| 0,03 | Gew.-% Dibutylzinndilaurat (DBTDL) |

### Erfindungsgemäße, kristallisationsstabile Formulierung II

| | |
|---|---|
| 36,45 | Gew.-% H₁₂MDI |
| | 15,62 Gew.-% IPDI |
| 47,90 | Gew.-% VORANOL CP 4755 |
| 0,03 | Gew.-% Dibutylzinndilaurat (DBTDL) |

### Eigenschaften der kristallisationsstabilen Formulierungen I + II

- NCO-Gehalt (DIN EN ISO 11909) : ca. 16 Gew.-%
- Viskosität (DIN EN ISO 3219) : ca. 250 mPas
- Aussehen (visuell) : klar
- Funktionalität (Zahlenmittel, theoretisch) : ca. 2,1

Es wurde festgestellt, dass die Kristallisation der Polyurethan-Prepolymere bei niedrigen Temperaturen schneller erfolgt, so dass alle resultierenden Prepolymere bei 4 °C gelagert und täglich einer visuellen Beurteilung unterzogen wurden. Entsprechend oben genannter Methode wurden alle Formulierungen täglich auf Kristallisationserscheinungen geprüft. Die folgende Tabelle gibt die Zeit in Tagen wieder, während der die jeweilige Formulierung keinerlei Anzeichen von Kristallisation zeigte.

| | Kristallisationsstabile Zeit in Tagen |
|---|---|
| Vergleichsformulierung | 1-3 |
| Formulierung I | 90 |
| Formulierung II | > 90 |

### Verwendungsbeispiele:

Die Formulierungen wurden zu einem Gießharz verarbeitet und dazu mit einem Polyetherpolyol umgesetzt.

Vernetzt wurde stöchiometrisch mit einem Polyetherpolyol welches
- eine OH-Zahl von ca. 400 mg KOH/g sowie die folgenden Zusätze aufwies:
- 2 % HALS (Hindered Amine Light Stabilizer)
- 2 % UV-Absorber auf Benzotriazol-basis
- 0,2 % BYK 070 (Entschäumer)
- 0,1 % COSCAT 83 (Katalysator)

Zur Beurteilung der Lichtstabilität obiger Formulierungen erfolgte eine Schnellbewitterung nach ISO 4892-3 (QUV-B).
Hierzu wurden Gießplatten von ca. 1 mm Schichtstärke für 1000 Stunden dem folgenden, fortlaufenden Bewitterungszyklus ausgesetzt:
- 4 Stunden UV-B bei einer Oberflächentemperatur von ca. 55 °C
- 4 Stunden Kondensation bei einer Oberflächentemperatur von ca. 45 °C

Die verwendeten UV-B - Röhren besaßen eine Intensität von 0,8 Watt/m² (gemessen bei einer Wellenlänge von 313 nm).

Die folgende Tabelle gibt das Maß der Vergilbung wieder. Hierzu wurde der b-Wert gemäß ISO 7724-3 ermittelt.

| | Δb [b (nach Bewitterung) - b (vor Bewitterung)] |
|---|---|
| Vergleichsformul ierung | 2,74 |
| Formulierung I | 2,92 |
| Formulierung II | 2,72 |

Alle Formulierungen wiesen ein vergleichbares Vergilbungsniveau auf.

## Patentansprüche

1. NCO-funktionelles Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000g/mol.

2. NCO-funktionelles Polyurethan Prepolymer nach Anspruch 1,
**dadurch gekennzeichnet,**
**dass** dieses eine Viskosität bei 23 °C von 100 mPas bis 2500 mPas (gemessen nach DIN EN ISO 3219) aufweist.

3. NCO-funktionelles Polyurethan Prepolymer nach mindestens einem der vorherigen Ansprüche,
**dadurch gekennzeichnet,**
**dass** Komponente A) aus 75 - 95 Gew.-% 4,4'-H₁₂MDI mit einem trans, trans-Gehalt von kleiner 30 % besteht.

4. NCO-funktionelles Polyurethan Prepolymer nach mindestens einem der vorherigen Ansprüche,
**dadurch gekennzeichnet, dass** Polyetherpolyole C) aus Alkoholen ausgewählt aus Ethylenglykol, 1,2-Propandiol, Trimethylolpropan, Glycerin und/oder Pentaerythritol und Ethylenoxid und/oder Propylenoxid enthalten sind.

5. NCO-funktionelles Polyurethan Prepolymer nach mindestens einem der vorherigen Ansprüche, **dadurch gekennzeichnet, dass** Polyetherpolyole C) 2 - 5 OH-Gruppen pro Molekül und ein Mw von 500 bis 6000 g/mol aufweisen.

6. Verfahren zur Herstellung von NCO-funktionellen Polyurethan Prepolymeren mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol, durch Umsetzung der Komponente A) und B) mit C).

7. Verwendung von NCO-funktionellen Polyurethan Prepolymeren mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C) 5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol,
zur Herstellung von Beschichtungen, Klebstoffen, Elastomeren, Gießharzen und 2 Komponenten Polyurethansystemen.

8. Beschichtungen enthaltend ein NCO-funktionelles Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol.

9. Klebstoffe enthaltend ein NCO-funktionelles Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol.

10. Elastomere enthaltend ein NCO-funktionelles Polyurethan Prepolymer mit einer NCO-Funktionalität von 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol.

11. Gießharze enthaltend ein NCO-funktionelles Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol.

12. Zwei Komponenten-Polyurethan-Systeme enthaltend ein NCO-funktionelles Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol.

13. Gegenstände, welche ein NCO-funktionelles Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C)5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol
enthalten.

14. Mit einem NCO-funktionellen Polyurethan Prepolymer mit einer NCO-Funktionalität von ≥ 2 und einem NCO-Gehalt von 5 - 30 Gew.-% aus
A) 20 - 80 Gew.-% Dicyclohexylmethandiisocyanat (H₁₂MDI),
B) 5 - 20 Gew.-% Isophorondiisocyanat (IPDI),
C) 5 - 75 Gew.-% mindestens einem Polyetherpolyol mit einer Funktionalität von 2 bis 5, einer OH-Zahl von 20 bis 800 mg KOH/g und einem mittleren Molekulargewicht Mw von 200 bis 8000 g/mol
beschichtete Gegenstände.

## Claims

1. NCO-functional polyurethane prepolymer having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

2. NCO-functional polyurethane prepolymer according to Claim 1, **characterized in that** it has a viscosity at 23°C of 100 mPas to 2500 mPas (measured in accordance with DIN EN ISO 3219).

3. NCO-functional polyurethane prepolymer according to at least one of the preceding claims, **characterized in that** component A) is composed of 75% - 95% by weight of 4,4'-H₁₂MDI with a trans,trans content of less than 30%.

4. NCO-functional polyurethane prepolymer according to at least one of the preceding claims, **characterized in that** polyether polyols C) from alcohols selected from ethylene glycol, 1,2-propanediol, trimethylolpropane, glycerol and/or pentaerythritol and ethylene oxide and/or propylene oxide are present.

5. NCO-functional polyurethane prepolymer according to at least one of the preceding claims, **characterized in that** polyether polyols C) have 2 - 5 OH groups per molecule and an Mw of 500 to 6000 g/mol.

6. Process for preparing NCO-functional polyurethane prepolymers having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol, by reaction of components A) and B) with C).

7. Use of NCO-functional polyurethane prepolymers having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol,
for producing coatings, adhesives, elastomers, casting resins and 2-component polyurethane systems.

8. Coatings containing an NCO-functional polyurethane prepolymer having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

9. Adhesives containing an NCO-functional polyurethane prepolymer having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

10. Elastomers containing an NCO-functional polyurethane prepolymer having an NCO functionality oft 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

11. Casting resins containing an NCO-functional polyurethane prepolymer having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

12. Two-component polyurethane systems containing an NCO-functional polyurethane prepolymer having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

13. Articles which contain an NCO-functional polyurethane prepolymer having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

14. Articles coated with an NCO-functional polyurethane prepolymer having an NCO functionality of ≥ 2 and an NCO content of 5% - 30% by weight, comprising
A) 20% - 80% by weight dicyclohexylmethane diisocyanate (H₁₂MDI),
B) 5% - 20% by weight isophorone diisocyanate (IPDI),
C) 5% - 75% by weight at least one polyether polyol having a functionality of 2 to 5, an OH number of 20 to 800 mg KOH/g and an average molecular weight Mw of 200 to 8000 g/mol.

## Revendications

1. Prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.

2. Prépolymère de polyuréthane à fonctionnalité NCO selon la revendication 1, **caractérisé en ce qu'**il présente une viscosité à 23°C de 100 mPa.s à 2500 mPa.s (mesurée selon la norme DIN EN ISO 3219).

3. Prépolymère de polyuréthane à fonctionnalité NCO selon au moins l'une quelconque des revendications précédentes, **caractérisé en ce que** le composant A) est constitué par 75-95% en poids de 4,4'-H₁₂MDI, présentant une teneur en trans, trans inférieure à 30%.

4. Prépolymère de polyuréthane à fonctionnalité NCO selon au moins l'une quelconque des revendications précédentes, **caractérisé en ce que** des polyétherpolyols C) d'alcools choisis parmi l'éthylèneglycol, le 1,2-propanediol, le triméthylolpropane, le glycérol et/ou le pentaérythritol et d'oxyde d'éthylène et/ou d'oxyde de propylène sont contenus.

5. Prépolymère de polyuréthane à fonctionnalité NCO selon au moins l'une quelconque des revendications précédentes, **caractérisé en ce que** les polyétherpolyols C) présentent 2-5 groupes OH par molécule et un Mw de 500 à 6000 g/mole.

6. Procédé pour la préparation de prépolymères de polyuréthane à fonctionnalité NCO présentant une fonctionnalité NCO ≥ 2 et une teneur en NCO de 5-30% en poids, constitués par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole par transformation des composants A) et B) avec C).

7. Utilisation de prépolymères de polyuréthane à fonctionnalité NCO présentant une fonctionnalité NCO ≥ 2 et une teneur en NCO de 5-30% en poids, constitués par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole,
pour la réalisation de revêtements, d'adhésifs, d'élastomères, de résines coulées et de systèmes de polyuréthane à 2 composants.

8. Revêtements contenant un prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.

9. Adhésifs contenant un prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.

10. Elastomères contenant un prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.

11. Résines coulées contenant un prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.

12. Systèmes de polyuréthane à deux composants contenant un prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.

13. Objets qui contiennent un prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.

14. Objets, revêtus par un prépolymère de polyuréthane à fonctionnalité NCO présentant une fonctionnalité NCO ≥ 2 et une teneur en NCO de 5-30% en poids, constitué par
A) 20-80% en poids de dicyclohexylméthanediisocyanate (H₁₂MDI),
B) 5-20% en poids d'isophoronediisocyanate (IPDI),
C) 5-75% en poids d'au moins un polyétherpolyol présentant une fonctionnalité de 2 à 5, un indice OH de 20 à 800 mg de KOH/g et un poids moléculaire moyen Mw de 200 à 8000 g/mole.
